# EUROPÄISCHE PATENTSCHRIFT

(11) **EP 1 157 303 B1**
(45) Veröffentlichungstag und Bekanntmachung des Hinweises auf die Patenterteilung: **25.09.2002**
(21) Anmeldenummer: 00910557.8
(22) Anmeldetag: 24.02.2000
(51) Int. Cl.: G02F 1/161, G02F 1/15

(54) **ELEKTROCHROMES ELEMENT**
ELECTROCHROMIC ELEMENT
ELEMENT ELECTROCHROME

(30) Priorität: 01.03.1999 DE 19908737
(43) Veröffentlichungstag der Anmeldung: 28.11.2001
(73) Patentinhaber: Flabeg GmbH & Co. KG, 90766 Fürth (DE)
(72) Erfinder: JÖDICKE, Dirk, D-93437 Furth im Wald (DE); BECKER, Hans-Joachim, D-91459 Markt Erlbach (DE); GUMPRICH, Volker, D-50668 Köln (DE); Batchelor Richard, Merseyside PR8 4RE (GB)
(74) Vertreter: Tönhardt, Marion, Dr.
(86) Internationale Anmeldenummer: DE0000553
(87) Internationale Veröffentlichungsnummer: WO00052523

(56) Entgegenhaltungen:
- EP-A- 0 683 215
- EP-A- 0 836 932
- US-A- 4 761 061
- US-A- 5 122 896
- PATENT ABSTRACTS OF JAPAN vol. 017, no. 166 (P-1514), 30. März 1993 (1993-03-30) & JP 04 328723 A (TONEN CORP), 17. November 1992 (1992-11-17)

## Beschreibung

Die Erfindung betrifft ein elektrochromes Element mit einer zwischen zwei flächigen Substraten eingeschlossenen elektrochromen Anordnung, die zumindest zwei Elektrodenschichten, eine elektrochrome Schicht, eine Ionenspeicherschicht sowie eine in situ gebildete Polymer-Elektrolytschicht umfaßt, wobei die Polymer-Elektrolytschicht zum Rand des elektrochromen Elementes hin an ein zumindest teilweise zwischen den beiden flächigen Substraten angeordnetes Dichtungselement angrenzt.

Elektrochrome Elemente des vorgenannten Aufbaus sind aus einer Vielzahl von Veröffentlichungen bekannt. Sie werden u.a. für Displays, abblendbare Spiegel sowie Verglasungen mit variabler Lichtdurchlässigkeit eingesetzt. Die flächigen Substrate, die eben oder auch gebogen sein können, bestehen jedenfalls bei großflächigen Verglasungen meist aus anorganischen Glasscheiben. Sie können aber auch aus anderen Materialien, z.B. Kunststoffen, bestehen. Für die Langzeitstabilität des elektrochromen Elements ist es unabdingbar, daß die Substrate hinreichend undurchlässig sind für in der Umgebung vorhandene Substanzen, insbesondere für in der Umgebungsluft vorhandene Gase. Sie müssen außerdem zuverlässig die elektrochrome Anordnung gegen die Abwanderung von flüchtigen Bestandteilen wie z.B. Weichmachern, Lösungsmitteln etc. schützen. Diese Anforderungen werden besonders gut von anorganischen Glasscheiben erfüllt. Der Einfachheit halber wird im folgenden daher im Zusammenhang mit den flächigen Substraten meist von Glasscheiben die Rede sein, ohne daß die Erfindung allerdings darauf beschränkt wäre.

Von den Elektrodenschichten muß zumindest eine lichtdurchlässig sein. Üblicherweise arbeitet man für beide Elektrodenschichten mit transparenten leitfähigen Metalloxidschichten (TCO's), z.B. aus ITO oder dotiertem Zinnoxid. Die Elektrodenschichten dienen dazu, an die elektrochrome Anordnung eine elektrische Spannung anlegen zu können, mit der deren Lichtdurchlässigkeit verändert werden kann. Für die elektrochrome Schicht kommen meist Materialien auf Basis von Wolframoxid zum Einsatz, deren Lichtdurchlässigkeit sich durch die Einlagerung von Kationen wie H⁺, Li⁺, Na⁺ etc. verändern läßt. Als Gegenpart benötigt die elektrochrome Schicht eine auch als Gegenelektrode bezeichnete Ionenspeicherschicht, für die eine Vielzahl von Materialien bekannt sind, darunter insbesondere Certitanoxid und Vanadiumtitanoxid.

Die elektrochrome Schicht und die Ionenspeicherschicht werden separiert durch eine den Ionentransport zwischen beiden gewährleistende Ionenleitschicht (Elektrolyt). Insbesondere für großflächige elektrochrome Elemente hat sich die Verwendung von in situ gebildeten Polymer-Elektrolytschichten bewährt. Die Polymer-Elektrolytschichten werden gebildet, indem eine u.a. Monomere und zumindest ein Leitsalz enthaltende flüssige Mischung zwischen die Glasscheiben eingebracht (injiziert) und dort polymerisiert wird. Die Polymer-Elektrolytschichten können im fertigen elektrochromen Element in fester, gelförmiger oder auch flüssiger Form vorliegen. Sie grenzen zum Rand des elektrochromen Elements hin an ein Dichtungselement.

Das randseitige Dichtungselement hat in erster Linie die Aufgabe, die zwischen den Glasscheiben angeordnete elektrochrome Anordnung auch zur Kante des elektrochromen Elements hin dauerhaft flüssigkeits- und gasdicht abzuschließen. Insbesondere muß verhindert werden, daß in der Umgebungsluft vorhandener Sauerstoff oder Wasserdampf in das System eindringen. Im Rahmen der Herstellung des elektrochromen Elements übemimmt das Dichtungselement außerdem die Aufgabe, die flüssig zwischen die Glasscheiben eingebrachte Monomer-Mischung flüssigkeitsdicht einzuschließen. Solche Monomer-Mischungen haben häufig eine sehr niedrige Viskosität, die unter derjenigen von Wasser liegen kann, so daß schon kleine Lecks oder Poren im Dichtungselement zum ungewollten Ausfließen der Monomer-Mischung führen würden. Schließlich dient das Dichtungselement auch als Abstandhalter zwischen den Glasscheiben, bevor die Polymer-Elektrolytschicht so weit verfestigt ist, daß sie diese Funktion selbst übernimmt.

Aus der EP 0 836 932 A1 ist ein elektrochromes Element mit den Merkmalen des Oberbegriffs bekannt, bei dem an die Polymer-Elektrolytschicht unmittelbar ein Dichtungselement angrenzt, das aus einem mit den Komponenten der elektrochromen Anordnung, insbesondere mit der Polymer-Elektrolytschicht, nicht chemisch reagierenden flüssigkeits- und gasdichten Dichtstoff besteht. Als für diesen Zweck geeignet werden Butyl-Dichtstoffe auf Polyisobutylenbasis erwähnt, die eine besonders hohe Gasdiffusionsdichtigkeit aufweisen. Das Dichtungselement ist nicht zwischen den Glasscheiben angeordnet, sondern schließt eine von den Glasscheiben und der elektrochromen Anordnung gebildete Stufe randseitig ab. Gegebenenfalls kann ein flüssigkeitsdichter Abschluß vorgesehen sein. Es haben Versuche der Anmelderin gezeigt, daß sich Dichtungselemente aus Butyl-Dichtstoffen, die hier die hauptsächliche Dichtungsfunktion übernehmen, im Zuge der Polymerisation der Polymer-Elektrolytschicht zumindest bereichsweise von dieser lösen, was zu einer vorzeitigen Alterung in diesen Bereichen führen kann. Außerdem ist es außerordentlich schwierig, einen geeigneten Dichtstoff zu finden, der mit üblicherweise für die Polymer-Elektrolytschicht verwendeten Materialien so gut verträglich ist, daß auch über längere Zeit kein Materialaustausch oder gar eine (elektro-) chemische Reaktion zwischen beiden Materialien erfolgt.

Es ist die Aufgabe der Erfindung, elektrochrome Elemente des vorgenannten Aufbaus dauerhaft gasdicht zu gestalten, wobei störende Wechselwirkungen des Dichtungselements mit der in situ gebildeten Polymer-Elektrolytschicht oder mit anderen Bestandteilen der elektrochromen Anordnung vermieden werden sollen. Ein Abreißen des Dichtungselements von der Polymer-Elektrolytschicht während deren Polymerisation soll vermieden werden. Das Dichtungselement soll außerdem die Herstellung des elektrochromen Elements, insbesondere das Einbringen der für die Bildung der Polymer-Elektrolytschicht erforderlichen Monomer-Mischung, mit üblichen Herstellverfahren ermöglichen und die flächigen Substrate zumindest während des Herstellungsprozesses zuverlässig auf Abstand halten.

Diese Aufgabe wird durch ein elektrochromes Element mit den Merkmalen von Anspruch 1 gelöst. Vorteilhafte Ausgestaltungen sind Gegenstand der Unteransprüche.

Erfindungsgemäß ist vorgesehen, daß das Dichtungselement aus einem unmittelbar an die Polymer-Elektrolytschicht sowie an die einander zugewandten Oberflächen der beiden flächigen Substrate (Glasscheiben) angrenzenden, plastisch verformbaren, flüssigkeitsdichten Kleberstreifen aus einem Polyacrylat sowie einem sich daran nach außen hin anschließenden, zumindest teilweise zwischen den beiden flächigen Substraten angeordneten Versiegelungsstrang aus einem mit dem Kleberstreifen chemisch verträglichen, gasdichten Dichtstoff besteht.

Überraschenderweise gelingt es durch die Verwendung eines erfindungsgemäß aus mindestens zwei separaten funktionalen Komponenten bestehenden Dichtungselements alle für die Herstellung und den dauerhaften Betrieb eines elektrochromen Elements benötigten Funktionen bereitzustellen. Der Kleberstreifen übernimmt dabei primär die Funktion eines das Abfließen der flüssigen Monomer-Mischung verhindernden Randabschlusses für die Polymer-Elektrolytschicht und wirkt außerdem als Abstandhalter für die Glasscheiben. Aufgrund seiner Plastizität kann der Kleberstreifen der im Zuge der Polymerisation schrumpfenden Polymer-Elektrolytschicht folgen und reißt nicht, wie andere bekannte Dichtungselemente, von diesem ab. Polyacrylat-Materialien sind chemisch gut verträglich mit einer Reihe von für die Polymer-Elektrolytschichten verwendbaren Materialien, insbesondere aber mit Polymer-Elektrolytschichten auf Basis von (Meth-) Acrylsäureestern, die sich für diesen Zweck ganz besonders bewährt haben.

Der erfindungsgemäße Polyacrylat-Kleberstreifen ist zwar flüssigkeitsdicht, jedoch nicht gasdicht. Er ist insbesondere nicht ausreichend diffusionsdicht gegenüber Gasen wie Sauerstoff und Wasserdampf sowie gegenüber Lösungsmitteln wie Propylencarbonat oder Ethylencarbonat. Der Kleberstreifen wird daher im Rahmen der Erfindung funktionell ergänzt durch einen chemisch mit dem Kleberstreifen gut verträglichen Versiegelungsstrang aus einem hoch gasdichten Dichtstoff.

Es hat sich gezeigt, daß Polyacrylat-Kleberstreifen sich besonders gut als eine Art Puffer oder Adapter zwischen den Materialien der Polymer-Elektrolytschicht einerseits und den Dichtstoffen des Versiegelungsstrangs andererseits eignen. Das Vorhandensein eines solchen mit beiden Materialien verträglichen Puffers erlaubt die Verwendung einer größeren Vielfalt von Dichtstoffen, als wenn diese unmittelbar an die Polymer-Elektrolytschicht grenzen würden und mit diesem (elektro-) chemisch verträglich sein müßten.

Vorzugsweise besteht der Kleberstreifen aus einem als Rollenware erhältlichen Klebeband aus einem Polyacrylat, welches eine Glasübergangstemperatur von weniger als 20°C aufweist. Bevorzugt liegt die Glasübergangstemperatur deutlich unter 20°C, insbesondere unter 10°C.

Solche Klebebänder werden z.B. unter dem Handelsnamen Scotch Acrylic Foam oder Scotch Isotac von der Firma 3M hergestellt und vertrieben. Derartige Klebebänder können bei Raumtemperatur gut verarbeitet werden. Sie passen sich leicht an die Kontur der angrenzenden Flächen an und zeigen eine Art Selbstheileffekt, so daß sich Einstichöffnungen, die beim Einstechen der Injektionswerkzeuge für das Einbringen der Monomer-Mischung zwischen die Glasscheiben entstehen, nach dem Entfernen der Werkzeuge rasch von selbst wieder verschließen. Es empfiehlt sich ergänzend, bei der Materialauswahl des Klebebandes darauf zu achten, daß das Material einen niedrigen bis mittleren Vernetzungsgrad aufweist. Auf diese Weise wird sichergestellt, daß die Klebrigkeit des Materials ausreichend hoch ist. Das Klebeband wird vor dem Zusammenbau der Komponenten des elektrochromen Elements entweder manuell oder maschinell auf den Rande einer der Glasscheiben aufgebracht. Dabei wird bevorzugt ein transparentes Klebeband verwendet. Da der Randbereich des elektrochromen Elements üblicherweise durch Rahmen verdeckt wird, können aber auch farbige oder opake Klebebänder eingesetzt werden.

Dabei sind für ein dauerhaftes Funktionieren von elektrochromen Elementen solche Kleberstreifen aus Polyacrylat besonders geeignet, deren Wassergehalt bei maximal 0,3 Gewichtsprozent liegt. Bevorzugt liegt der Wassergehalt unter 0,05 Gewichtsprozent. Gegebenenfalls ist der Kleberstreifen vor der Verwendung einer geeigneten Trocknungsbehandlung zu unterziehen. Bei einem höheren Wassergehalt des Kleberstreifens besteht die Gefahr einer Diffusion dieses Wassers in die Polymer-Elektrolytschicht, was zur Bläschenbildung und vorzeitiger Alterung führen kann.

Der Kleberstreifen weist bevorzugt eine Breite von mindestens 5 mm und maximal 20 mm auf. Bei geringeren Breiten wird die Handhabung und das Erreichen der Flüssigkeitsdichtigkeit erschwert, während sich bei größeren Breiten das Verhältnis von nutzbarer Fläche zur Gesamtfläche des elektrochromen Elements verschlechtert, ohne daß sich dessen Eigenschaften noch nennenswert verbessern.

Für den Versiegelungsstrang wird bevorzugt ein hoch gasdichter Butyl-Dichtstoff auf der Basis von Polyisobutylen oder Butylkautschuk oder ein Epoxid-Dichtstoff verwendet. Dabei sind solche Materialien bevorzugt, die zur Vermeidung von Kriechströmen im Falle von Butyl-Dichtstoffen eine spezifische elektrische Leitfähigkeit von weniger als 10⁻⁹ Ω⁻¹·cm⁻¹, vorzugsweise weniger als 10⁻¹¹ Ω⁻¹·cm⁻¹, und im Falle von Epoxid-Dichtstoffen eine spezifische elektrische Leitfähigkeit von weniger als 10⁻¹² Ω⁻¹·cm⁻¹, vorzugsweise weniger als 10⁻¹³ Ω⁻¹ ·cm⁻¹, aufweisen. In beiden Fällen sollte die Wasserdampfdurchlässigkeit gemäß DIN 53122-1.2 (entsprechend prEN 1279-4) bei höchstens etwa 4,0 g·m⁻²·d⁻¹ liegen. Die Wasserdampfdurchlässigkeit wird dabei entsprechend der Norm an 2 mm dicken Folien aus dem betreffenden Material bestimmt.

Die vorgenannten Dichtstoff-Materialien sind chemisch besonders gut mit den erfindungsgemäß für den Kleberstreifen verwendeten Polyacrylat-Materialien verträglich und verfügen über eine ausgezeichnete Diffusionsdichtigkeit gegenüber Gasen wie Sauerstoff und Wasserdampf sowie Lösungsmitteln wie z.B. Propylencarbonat oder Ethylencarbonat. Auch andere als Dichtstoffe gebräuchliche und bekannte Materialien sind einsetzbar, sofern sie eine vergleichbare Dichtigkeit gegenüber den genannten Gasen gewährleisten wie die im Rahmen der Erfindung bevorzugten Materialien und mit dem Polyacrylat-Kleberstreifen verträglich sind. Dies kann der Fachmann durch einfache Versuche feststellen.

Bevorzugte Butyl-Dichtstoffe sind z.B. Bostik 5124 oder 5125 (Firma Bostik) auf der Basis eines Butylkautschuks mit folgenden Eigenschaften:

| | |
|---|---|
| Wasserdampfdurchlässigkeit | etwa 0,10 - 0,15 g·m⁻²·d⁻¹ |
| spezifische elektrische Leitfähigkeit | etwa 10⁻¹¹ Ω⁻¹·cm⁻¹ |

Bevorzugte Epoxid-Dichtstoffe sind z.B. Araldit 2012 oder 2014 (Ciba-Geigy) mit folgenden Eigenschaften:

| | |
|---|---|
| Wasserdampfdurchlässigkeit | etwa 4,0 g·m⁻²·d⁻¹ |
| spezifische elektrische Leitfähigkeit | etwa 10⁻¹⁴ Ω⁻¹·cm⁻¹ |

oder Eccobond 45 (Grace Specialty Polymers / Emerson & Cuming) mit folgenden Eigenschaften:

| | |
|---|---|
| Wasserdampfdurchlässigkeit | etwa 2,5 g·m⁻²·d⁻¹ |
| spezifische elektrische Leitfähigkeit | etwa 3 · 10⁻¹⁴ Ω⁻¹·cm⁻¹ |

Es versteht sich, daß ein Dichtstoff, insbesondere auf der Basis von Butylkautschuk, Polyisobutylen oder Epoxidharz, in der Funktion zur Randabdichtung einer elektrochromen Einheit in dem zur Funktion des elektrochromen Elementes notwendigen elektrischen Spannungsbereich elektrochemisch inert sein muß. Dies bedeutet, daß der Dichtstoff keine elektrochemischen Zersetzungsreaktionen beim Anlegen eines elektrischen Potentials von beispielsweise 3 oder 5 Volt zeigen darf.

Es versteht sich außerdem, daß der Versiegelungsstrang wie der Kleberstreifen über den gesamten Scheibenumfang zwischen den Glasscheiben angeordnet sein muß, um gemeinsam mit den Glasscheiben das elektrochrome Element diffusionsdicht einzuschließen. Dabei muß der Versiegelungsstrang nicht bündig mit der Scheibenkante abschließen. Er kann vielmehr auch die Scheibenkanten zumindest teilweise überdecken.

Es kann vorteilhaft sein, wenn das elektrochrome Element nach außen hin in an sich bekannter Weise mit einem weiteren Dichtstoffstrang abgedichtet wird. Geeignet hierfür sind vor allem für die Isolierglasherstellung verwendete Materialien auf Polysulfid-Basis. Das ist insbesondere dann sinnvoll, wenn das elektrochrome Element mit mindestens einer weiteren Glasscheibe zu einer Isolierglaseinheit zusammengebaut wird.

Bevorzugt grenzt der Versiegelungsstrang unmittelbar an den Kleberstreifen. Es liegt jedoch im Rahmen der Erfindung, zwischen den beiden Bestandteilen des erfindungsgemäßen Dichtelementes mindestens einen weiteren funktionellen Bestandteil, z.B. eine Trennschicht oder eine Haftvermittlerschicht, vorzusehen, wenn der hierdurch erzielte Nutzen durch den dafür erforderlichen Mehraufwand gerechtfertigt ist. Es kann auch vorgesehen sein, die Glasscheiben im Bereich des Kleberstreifens, des Versiegelungsstrangs oder eines zusätzlichen Dichtstoffstrangs mit einem Haftvermittler zu versehen, um die Haftung dieser Materialien zum Glas zu verbessern.

Die Erfindung ist mit besonderem Vorteil anwendbar bei elektrochromen Elementen mit einer Polymer-Elektrolytschicht, die neben dem für die Bereitstellung einer ausreichenden Menge an Kationen erforderlichen Leitsalzanteil (z.B. gemäß WO 95-31746 A1) wenigstens einen (Meth-) Acrylsäureester, wenigstens einen Weichmacher und wenigstens einen Polymerisationsinitiator aufweist (EP 0 683 215 A1).

Die Erfindung wird anhand der in den Figuren dargestellten Ausführungsformen im weiteren näher erläutert. Dabei zeigt:
- Figur 1: eine erste Ausführungsform eines erfindungsgemäßen elektrochromen Elements im Querschnitt,
- Figur 2: eine zweite Ausführungsform eines erfindungsgemäßen elektrochromen Elements in entsprechender Darstellung.

Die Darstellung in den Figuren ist als Prinzipdarstellung zu verstehen. Die Abmessungen sind nicht maßstäblich.

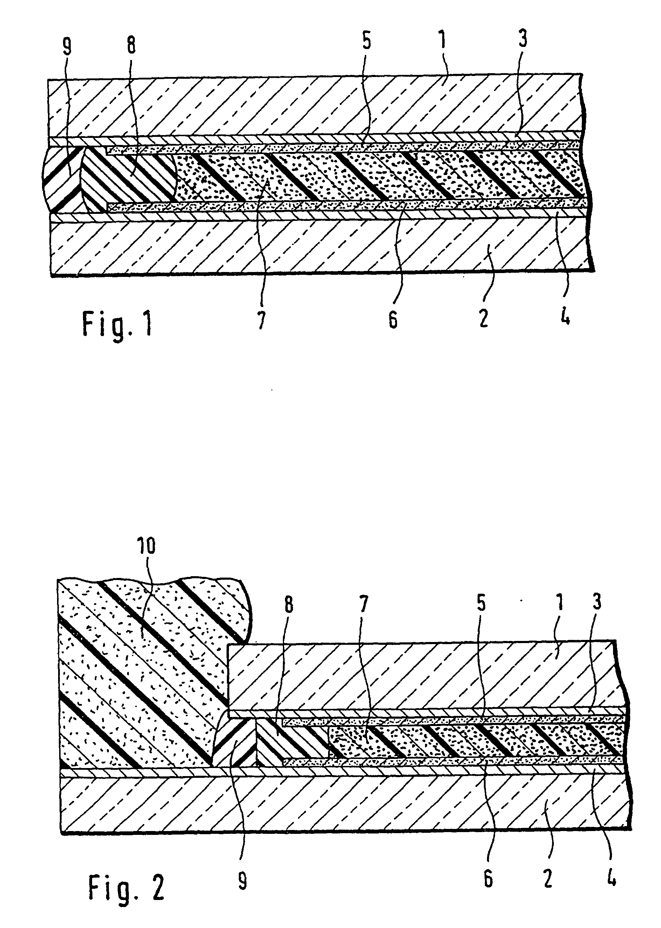

Das elektrochrome Element gemäß Figur 1 besteht aus zwei 4 mm dicken transparenten Floatglasscheiben 1 und 2, die auf ihren einander zugewandten Oberflächen jeweils mit transparenten Elektrodenschichten 3, 4 aus Indium-Zinnoxid (ITO), aus Fluor-dotiertem Zinnoxid oder einem anderen elektrisch leitfähigen Metalloxid versehen sind. Auf der Elektrodenschicht 3 ist eine elektrochrome Schicht 5 aus Wolframoxid angeordnet, während sich auf der Elektrodenschicht 4 eine Ionenspeicherschicht 6 aus einem oder mehreren Metalloxiden, wie z.B. Cer-, Vanadium-, Titan-, Zirkon- oder Nickeloxid, befindet. Der Randbereich der Elektrodenschichten 3, 4 ist jeweils über einen Bereich von einigen Millimetern unbeschichtet, wie in der Figur erkennbar ist. Nicht dargestellt sind die Sammelschienen, über die die Elektrodenschichten 3, 4 mit einer elektrischen Spannung beaufschlagt werden.

Zwischen den beschichteten Glasscheiben 1' 2 befindet sich eine 0,9 mm dicke, in situ polymerisierte Polymer-Elektrolytschicht 7 gemäß EP 0 683 215 A1 mit einem Leitsalzanteil entsprechend WO 95-31746 A1. Sie grenzt unmittelbar an einen 0,9 mm dicken und 9 mm breiten transparenten Kleberstreifen 8 aus einem niedrig vernetzten Polyacrylat, der aus einem unter dem Handelsnamen Scotch Isotac VHB 4910 vertriebenen, vor der Applikation einer Trocknungsbehandlung unterzogenen Klebeband der Firma 3M mit den entsprechenden Abmessungen gebildet wurde. Das Polyacrylat dieses Klebebands weist eine Glasübergangstemperatur zwischen 5 und 10°C auf. Die Glasübergangstemperatur wurde ermittelt durch Dynamische Thermomechanometrie (siehe z.B. "Untersuchungsmethoden in der Chemie", Georg Thieme Verlag, 2. Auflage 1990, Kapitel 1, S. 13).

Die zwischen der zum Rand des elektrochromen Elements weisenden Außenfläche des Kleberstreifens 8 und den Außenkanten der Glasscheiben 1, 2 verbleibende umlaufende Nut ist mit einem Versiegelungsstrang 9 aus einem Epoxid-Dichtstoff Araldit 2012 ausgefüllt. Der Versiegelungsstrang 9 schließt im wesentlichen bündig mit den Außenkanten der Glasscheiben 1, 2 ab. Er könnte diese Kanten aber auch zumindest bereichsweise überdecken.

Figur 2 zeigt im Querschnitt einen Randausschnitt einer mit einem erfindungsgemäßen elektrochromen Element gebildeten Isolierglaseinheit. Die Ausführungsform des elektrochromen Elements gemäß Figur 2 unterscheidet sich von derjenigen in Figur 1 dadurch, daß die Glasscheibe 1 geringere Außenabmessungen aufweist als die Glasscheibe 2. Wie im vorigen Beispiel ist ein aus einem Klebeband Scotch Isotac VHB 4910 der Firma 3M gebildeter Kleberstreifen 8 vorgesehen, der an die Polymer-Elektrolytschicht 7 unmittelbar angrenzt. Die Breite des Kleberstreifens 8 ist in diesem Falle mit 6 mm etwas geringer als im vorhergehenden Beispiel gewählt, um den Verlust an verfügbarer Sichtfläche, der durch die gestufte Ausführung des elektrochromen Elements verursacht wird, zumindest teilweise zu kompensieren. An den Kleberstreifen 8 grenzt ein in diesem Falle aus einem Butyl-DichtstoffBostik 5125 gebildeter Versiegelungsstrang 9. Die von den beiden Glasscheiben 1, 2 und von der Außenfläche des Versiegelungsstrangs 9 gebildete Stufe ist mit einem weiteren Dichtstoffstrang 10 aus einem PolysulfidIsolierglaskleber, z.B. aus dem Polysulfid Naftotherm M 82 der Firma Chemetall, ausgefüllt. Der Dichtstoffstrang 10 ist nur ausschnittsweise dargestellt, während alle weiteren Bestandteile der Isolierglaseinheit, wie z.B. der Abstandhalter und die mindestens eine weitere Glasscheibe, ganz weggelassen wurden. Der Aufbau von Isolierglasscheiben ist allgemein bekannt, so daß sich die Darstellung weiterer Einzelheiten in diesem Zusammenhang erübrigt.

Die beiden in den Figuren dargestellten elektrochromen Elemente überstanden verschiedene Alterungstests ohne erkennbare Schädigungen.

## Patentansprüche

1. Elektrochromes Element mit einer zwischen zwei flächigen Substraten eingeschlossenen elektrochromen Anordnung, die zumindest zwei Elektrodenschichten, eine elektrochrome Schicht, eine Ionenspeicherschicht sowie eine in situ gebildete Polymer-Elektrolytschicht umfaßt, wobei die Polymer-Elektrolytschicht zum Rand des elektrochromen Elementes hin an ein zumindest teilweise zwischen den beiden flächigen Substraten angeordnetes Dichtungselement angrenzt, **dadurch gekennzeichnet, daß** das Dichtungselement aus einem zwischen den beiden flächigen Substraten (1, 2) angeordneten und unmittelbar an die Polymer-Elektrolytschicht (7) angrenzenden, plastisch verformbaren, flüssigkeitsdichten Kleberstreifen (8) aus einem Polyacrylat sowie einem sich daran nach außen hin anschließenden, zumindest teilweise zwischen den beiden flächigen Substraten (1, 2) angeordneten Versiegelungsstrang (9) aus einem mit dem Kleberstreifen (8) chemisch verträglichen, gasdichten Dichtstoff besteht.

2. Elektrochromes Element nach Anspruch 1, **dadurch gekennzeichnet, daß** der Kleberstreifen (8) aus einem Polyacrylat-Klebeband gebildet ist.

3. Elektrochromes Element nach Anspruch 1 oder 2, **dadurch gekennzeichnet, daß** der Kleberstreifen (8) eine Breite von mindestens 5 mm aufweist.

4. Elektrochromes Element nach Anspruch 3, **dadurch gekennzeichnet, daß** der Kleberstreifen (8) eine Breite von maximal 20 mm aufweist.

5. Elektrochromes Element nach einem der vorangehenden Ansprüche, **dadurch gekennzeichnet, daß** der Kleberstreifen (8) aus einem Polyacrylat mit einem Wassergehalt von maximal 0,3 Gewichtsprozent, bevorzugt weniger als 0,05 Gewichtsprozent, besteht.

6. Elektrochromes Element nach einem der vorangehenden Ansprüche, **dadurch gekennzeichnet, daß** der Kleberstreifen (8) aus einem Polyacrylat mit einer Glasübergangstemperatur unter 20°C, bevorzugt unter 10°C, besteht.

7. Elektrochromes Element nach einem der vorangehenden Ansprüche, **dadurch gekennzeichnet, daß** der Versiegelungsstrang (9) aus einem Butyl-Dichtstoffauf Polyisobutylenoder Butylkautschukbasis besteht.

8. Elektrochromes Element nach Anspruch 7, **dadurch gekennzeichnet, daß** der Versiegelungsstrang (9) eine spezifische Leitfähigkeit von weniger als 10⁻⁹ Ω⁻¹·cm⁻¹, vorzugsweise weniger als 10⁻¹¹ Ω⁻¹·cm⁻¹, und eine Wasserdampfdurchlässigkeit, gemessen gemäß DIN 53122-1.2, von weniger als 0,5 g·m⁻²·d⁻¹ aufweist.

9. Elektrochromes Element nach einem der Ansprüche 1 bis 6, **dadurch gekennzeichnet, daß** der Versiegelungsstrang (9) aus einem Epoxid-Dichtstoff besteht.

10. Elektrochromes Element nach Anspruch 9, **dadurch gekennzeichnet, daß** der Versiegelungsstrang (9) eine spezifische Leitfähigkeit von weniger als 10⁻¹² Ω⁻¹·cm⁻¹, vorzugsweise weniger als 10⁻¹³ Ω⁻¹·cm⁻¹, und eine Wasserdampfdurchlässigkeit gemäß DIN 53122-1.2 von weniger als 4,0 g·m⁻²·d⁻¹ aufweist.

11. Elektrochromes Element nach einem der vorangehenden Ansprüche, **dadurch gekennzeichnet, daß** an den Versiegelungsstrang (9) mindestens ein weiterer Dichtstoffstrang (10), insbesondere auf Polysulfid-Basis, angrenzt.

12. Elektrochromes Element nach einem der vorangehenden Ansprüche, **dadurch gekennzeichnet, daß** die Polymer-Elektrolytschicht (7) wenigstens einen (Meth-) Acrylsäureester, wenigstens einen Weichmacher und wenigstens einen Polymerisationsinitiator umfaßt.

## Claims

1. An electrochromic element with an electrochromic array contained between two flat substrates and comprising at least two electrode layers, an electrochromic layer, an ion storage layer and a polymer electrolyte layer formed in situ, the polymer electrolyte layer adjoining, towards the edge of the electrochromic element, a sealing element disposed at least partially between the two flat substrates, **characterised in that** the sealing element consists of a plastically deformable liquid-tight adhesive strip (8) of a polyacrylate disposed between the two flat substrates (1, 2) and directly adjoining the polymer electrolyte layer (7), and of a sealing strand (9) consisting of a gas-tight sealant chemically compatible with the adhesive strip (8), said sealing strand (9) adjoining the adhesive strip (8) towards the outside and being disposed at least partially between the two flat substrates (1, 2).

2. An electrochromic element according to claim 1, **characterised in that** the adhesive strip (8) is formed from a polyacrylate adhesive tape.

3. An electrochromic element according to claim 1 or 2, **characterised in that** the adhesive strip (8) has a width of at least 5 mm.

4. An electrochromic element according to claim 3, **characterised in that** the adhesive strip (8) has a width of 20 mm maximum.

5. An electrochromic element according to any one of the preceding claims, **characterised in that** the adhesive strip (8) consists of a polyacrylate with a water content of 0.3% by weight maximum, preferably less than 0.05% by weight.

6. An electrochromic element according to any one of the preceding claims, **characterised in that** the adhesive strip (8) consists of a polyacrylate with a glass transition temperature below 20°C, preferably below 10°C.

7. An electrochromic element according to any one of the preceding claims, **characterised in that** the sealing strand (9) consists of a polyisobutylene or butyl rubber based butyl sealant.

8. An electrochromic element according to claim 7, **characterised in that** the sealing strand (9) has a specific conductivity of less than 10⁻⁹Ω⁻¹.cm⁻¹, preferably less than 10⁻¹¹ Ω⁻¹.cm⁻¹, and a water vapour permeability, measured in accordance with DIN 53122-1.2, of less than 0.5 g.m⁻².d⁻¹.

9. An electrochromic element according to any one of claims 1 to 6, **characterised in that** the sealing strand (9) consists of an epoxy sealant.

10. An electrochromic element according to claim 9, **characterised in that** the sealing strand (9) has a specific conductivity of less than 10⁻¹²Ω⁻¹.cm⁻¹, preferably less thsan 10⁻¹³Ω⁻¹.cm⁻¹, and a water vapour permeability according to DIN 53122-1.2 of less than, 4.0 g.m⁻².d⁻¹.

11. An electrochromic element according to any one of the preceding claims, **characterised in that** at least one additional sealant strand (10), particularly a poysulphide based sealant, adjoins the sealing strand (9).

12. An electrochromic element according to any one of the preceding claims, **characterised in that** the polymer electrolyte layer (7) contains at least one (meth-)acrylic acid ester, at least one softener and at least one polymerisation initiator.

## Revendications

1. Elément électrochrome avec agencement électrochrome enfermé entre deux substrats plats, qui comprend au moins deux couches d'électrodes, une couche électrochrome, une couche d'accumulation d'ions ainsi qu'une couche d'électrolyte polymère formée in situ, la couche d'électrolyte polymère étant adjacente, vers le bord de l'élément électrochrome, à un élément d'étanchéité disposé au moins en partie entre les deux substrats plats, **caractérisé en ce que** l'élément d'étanchéité est constitué d'une bande de colle (8) en polyacrylate étanche aux liquides, plastiquement déformable, disposée entre les deux substrats plats (1, 2) et directement adjacente à la couche d'électrolyte polymère (7), ainsi que d'un cordon de scellement (9), constitué d'une matière étanche aux gaz, chimiquement compatible avec la bande de colle (8), se raccordant à celle-ci vers l'extérieur, et disposé au moins en partie entre les deux substrats plats (1, 2).

2. Elément électrochrome selon la revendication 1, **caractérisé en ce que** la bande de colle (8) est formée par un ruban adhésif en polyacrylate.

3. Elément électrochrome selon la revendication 1 ou 2, **caractérisé en ce que** la bande de colle (8) présente une largeur d'au moins 5 mm.

4. Elément électrochrome selon la revendication 3, **caractérisé en ce que** la bande de colle (8) présente une largeur de 20 mm au maximum.

5. Elément électrochrome selon l'une des revendications précédentes, **caractérisé en ce que** la bande de colle (8) est constituée d'un polyacrylate avec une teneur en eau de 0,3 pour cent en poids au maximum, de préférence inférieure à 0,05 pour cent en poids.

6. Elément électrochrome selon l'une des revendications précédentes, **caractérisé en ce que** la bande de colle (8) est constituée d'un polyacrylate présentant une température de transition vitreuse inférieure à 20 °C, de préférence inférieure à 10 °C.

7. Elément électrochrome selon l'une des revendications précédentes, **caractérisé en ce que** le cordon de scellement (9) est constitué d'une matière d'étanchéité butyle à base de polyisobutylène ou de caoutchouc butylique.

8. Elément électrochrome selon la revendication 7, **caractérisé en ce que** le cordon de scellement (9) présente une conductibilité spécifique inférieure à 10⁻⁹ Ω⁻¹.cm⁻¹, de préférence inférieure à 10⁻¹¹ Ω⁻¹.cm⁻¹, et une perméabilité à la vapeur d'eau, mesurée selon la norme DIN 53122-1.2, inférieure à 0,5 g.m⁻².d⁻¹.

9. Elément électrochrome selon l'une des revendications 1 à 6, **caractérisé en ce que** le cordon de scellement (9) est constitué d'une matière d'étanchéité époxy.

10. Elément électrochrome selon la revendication 9, **caractérisé en ce que** le cordon de scellement (9) présente une conductibilité spécifique inférieure à 10⁻¹² Ω⁻¹.cm⁻¹, de préférence inférieure à 10⁻¹³ Ω⁻¹·cm⁻¹, et une perméabilité à la vapeur d'eau, mesurée selon la norme DIN 53122-1.2, inférieure à 4,0 g.m⁻².d⁻¹.

11. Elément électrochrome selon l'une des revendications précédentes, **caractérisé en ce qu'**au moins un autre cordon de matière étanche (10), en particulier à base de polysulfure, est adjacent au cordon de scellement (9).

12. Elément électrochrome selon l'une des revendications précédentes, **caractérisé en ce que** la couche d'électrolyte polymère (7) contient au moins un ester d'acide (méth) acrylique, au moins un plastifiant et au moins un initiateur de polymérisation.
